# EUROPEAN PATENT APPLICATION

(11) **EP 2 832 209 A1**
(43) Date of publication of application: **04.02.2015**
(21) Application number: 14382219.5
(22) Date of filing: 12.06.2014
(51) Int. Cl.: A01G 27/00, A01G 29/00, A01G 27/04

(54) **Portable device for drip irrigation and treatment of plants**

(30) Priority: 30.07.2013 ES 201331175
(71) Applicant: Escudero Archilla, Gabriel, 07184 Calvia (ES)
(72) Inventor: Escudero Archilla, Gabriel, 07184 Calvia (ES)
(74) Representative: Gallego Jiménez, José Fernando

(57) **Abstract**

Portable device for drip irrigation and the treatment of plants; that comprises: a housing (1) provided with an upper chamber (11) with a threaded mouth (12) for the engagement with a vessel (5) containing liquid (51) to be dispensed, and a lower chamber (13) provided with a pointed end (15) for plunging it into the ground or in a plant, and openings (16, 17) for air inflow and for outflow of liquid to the exterior; and a drip tube (2) containing a wick (3), which is placed passing through the transverse wall (14) establishing a liquid flow from the upper chamber (11) to the lower chamber (13); said dip tube (2) comprising a mouth (22) for the intake of liquid (51); a mouth (24) for outflow of liquid (51) and at least one lateral opening (25) for air inflow.

## Description

### Object of the invention

This invention relates to a portable device for drip irrigation and the treatment of plants, which has some features designed to permit its use in any place by plunging it into the ground or into the plant, achieving a drop by drop dosage of irrigation or plant treatment liquid.

### Technical field

This invention is applicable in the care and treatment of plants and trees in general.

### State of the art

The treatment of plants against fungi, bacteria and other micro-organisms is usually accomplished by the external application of bactericides or fungicides, dissolved in water, using spraying or irrigation techniques.

A drawback of this type of application is that it is only done occasionally, which prevents the plants from completely absorbing the applied product and that the treatment time can be prolonged, for example during 24-48 hours, to allow proper absorption of the same by the plants.

In the case of the application of both chemical and biological treatment products, it is usual to mix them with water which can cause blockages in the parts used for their application, especially when this involves using sprays, nozzles or atomizers.

A suitable technique for the application of irrigation or plant treatment products is that which is done by drip irrigation; however this technique requires the use of nozzles that perform the dripping of the product and that need to be connected to a liquid supply conduit under pressure. The need for this feeding through a pressurized distribution circuit can be effective for the irrigation or treatment of plants located in a given space, but is not useful when an occasional treatment is desired for plants and trees in other areas of cultivation.

Therefore, the technical problem posed is the development of a portable device for drip irrigation and the treatment of plants, which provides a dosage of the product to be dispensed, drop by drop, and that is easily transportable and can be used in any location.

### Description of the invention

The portable device for drip irrigation and the treatment of plants, object of the present invention, has some structural features aimed at making it of a transportable nature, and to supply the plants with an irrigation or treatment liquid through a drip technique that can be prolonged in time, so that it is effective and the plant can absorb the liquid product dispensed.

Another objective of the present invention is to provide said device with a suitable configuration to allow it to be stuck in the ground near the roots of the plant or in the plant itself, for example in the heart of the palm trees, achieving the direct application of the product to the plant.

Another objective of the present invention is to provide the device with a configuration suitable for the drop by drop supply of the liquid to be dispensed by gravity from a container vessel of said liquid and, without the need for the device to be connected to a pipe or pressurized supply network; for this reason this device has a portable nature and can be used anywhere, completely autonomously, without requiring for its operation connection to a power grid or a water supply.

To achieve the objectives proposed, this device comprises a housing provided with an upper chamber with a threaded mouth for the engagement to a container vessel of a liquid to be dispensed drop by drop, and a lower chamber, separated from the upper chamber by a transverse wall; said lower chamber being provided with a pointed end for plunging it into the ground or in a plant, and the appropriate openings for air inflow and the outlet of the dispensed liquid.

Inside the said housing the device contains a drip tube placed passing through the transverse wall of said housing, establishing a supply path of the liquid from the upper chamber to the lower chamber. Said drip tube has a wick which regulates and ensures the descent, by its own weight, of the liquid to be supplied, through the interior of said drip tube.

This drip tube comprises: a first segment housed in the upper chamber and is provided with an opening inlet for the liquid from the container vessel and engaged to the threaded mouth of said upper chamber; and a second section housed in the lower chamber, having a mouth for the drop by drop outflow of liquid, and at least one lateral opening for air inflow, which is spaced at a measured distance from the outlet mouth, depending on the drip frequency or the dosage to be made of the dispensed liquid.

One feature of this device is that the liquid being dispensed runs down the interior of the drip tube by its own weight, falling, drop by drop, through the mouth outlet whilst air enters the interior of the drip tube through the lateral openings and ascends through said drip tube to the container vessel of liquid.

As the liquid supply is performed drop by drop, once the device is stuck in the ground, or in the plant itself, and is engaged at its upper opening to the container vessel of the liquid to be dispensed, this liquid starts descending, drop by drop, with a variable frequency, which basically depends on the difference in height between the liquid outlet mouth and the lateral air inflow opening determined in said drip tube.

In this invention it is envisaged that the first section of the drip tube housed in the upper chamber can include, at least, one lateral outlet opening for the intake of the liquid to be dispensed.

This device permits the dispensing of the dosage contained in the vessel over a variable period of time, for example more than 24 hours, which enables it to achieve the correct irrigation or treatment of the plant, in that, it can slowly absorb the liquid product supplied.

In one embodiment of the invention this device comprises a tubular protection of suitable dimensions to allow successive introductions and extractions of the device's housing and to give it a stable hold on the position of use; so that once the tubular protection is stuck in the ground or in a plant, it is possible to take out and replace the liquid dispensing device therefrom, for example to replace the bottle, said protection remaining stuck in the same position.

Said tubular protection comprises: a lower end finishing in a point, suitable for plunging it into the ground or in a plant; an upper end provided with an opening suitable for the introduction of the device's housing into its interior and provided with at least one outer stop to limit the depth of entry into the ground or plant; and through openings for air inflow and for outflow of liquid dispensed by the device.

Notably, both the housing and the tubular protection can be made from a plastic material that allows its reuse or a biodegradable material, for example based on wheat or potato starch, or other natural products that allow the device to be left stuck in the ground or in the plant to decompose, making its collection unnecessary.

### Description of figures

In order to complement the description that is being carried out and with the purpose of facilitating the understanding of the characteristics of the invention, the present description is accompanied by a set of drawings wherein, by way of a non-limiting example, the following has been represented:

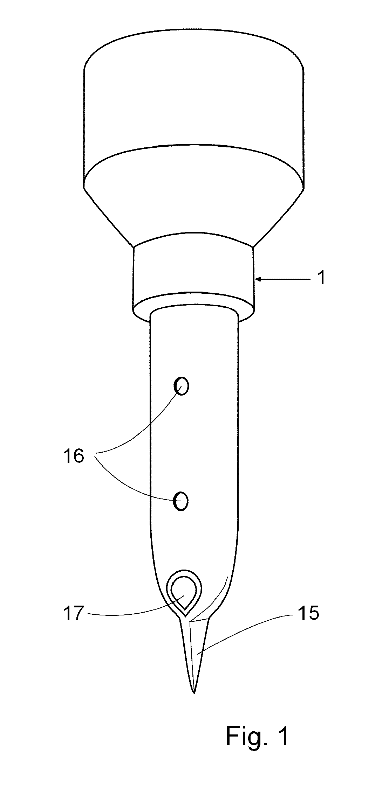

- Figure 1 shows a perspective view of an exemplary embodiment of the portable device for drip irrigation and the treatment of plants, according to the invention.
- Figure 2 shows an elevated view of the device of the previous figure sectioned along a vertical plane, and an enlarged detail of a lateral air inflow opening to the drip tube.
- Figure 3 shows an elevated view of the device of the previous figure sectioned along a vertical plane and in a position of use, with the upper mouth of the same being engaged to the container vessel of the liquid to be dispensed.
- Figure 4 shows a similar view to the previous view in which the device comprises a tubular protection which is shown sectioned along a vertical plane and facing the housing of the device.
- Figure 5 shows an elevated view of the device of the invention in a position of use and sectioned along a vertical plane, with the housing of the device being engaged to the tubular protection stuck in the ground or in a plant.

### Preferred embodiment of the invention

In the exemplary embodiment shown in the accompanying figures the portable device comprises a housing (1) provided with an upper chamber (11) with a threaded mouth (12) and a lower chamber (13) separated from the upper chamber by a transverse wall (14).

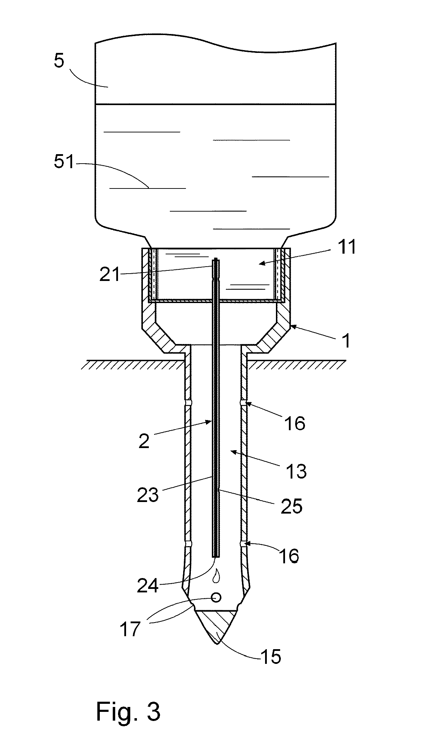

Said lower chamber is provided with a pointed end (15) for plunging it into the ground or into a plant as shown in Figure 3, and openings (16, 17) suitable for air inflow and for outflow of liquid.

The threaded mouth (12) of the housing (1) allows the engagement thereon of a container vessel (5) of the liquid to be dispensed, as shown for example in Figure 3 above.

Inside the housing there is a drip tube (2) that contains a wick (3) and is placed passing through the transverse wall (14).

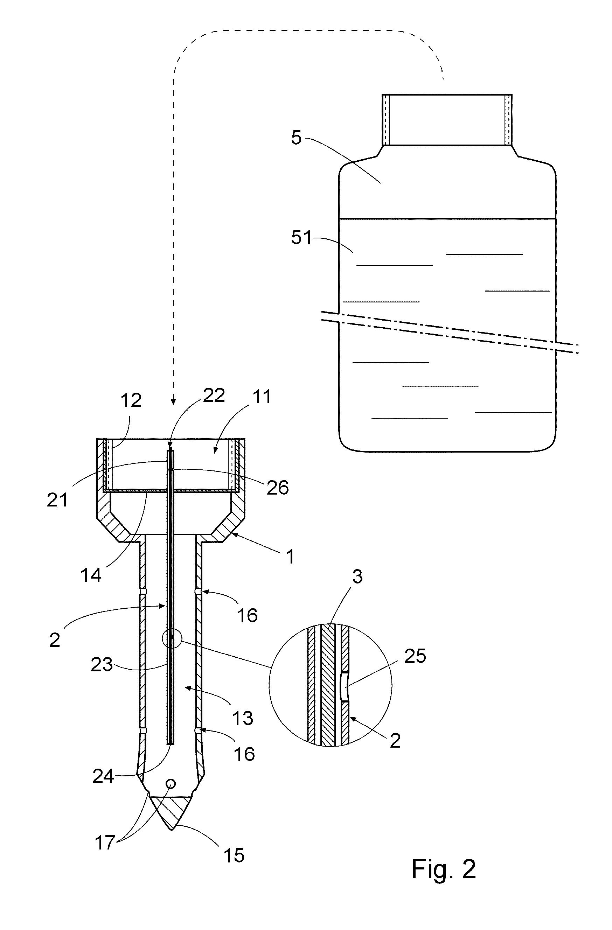

As can be seen in Figure 2, the drip tube (2) comprises: a first section (21) housed in the upper chamber (11) of the housing and having a mouth (22) for the liquid inlet; and a second section (23) housed in the lower chamber (13), provided with a mouth (24) for liquid outlet (51) and at least one lateral opening (25) for air inflow.

This lateral opening (25) can be spaced from the mouth for liquid outlet (2) to a variable extent, depending on the frequency of dripping or dosage to be done of the liquid (51) to be dispensed.

In the embodiment shown, said drip tube (2) comprises, in the first section (21) lateral openings (26) for the intake of the liquid to be dispensed.

With this configuration of the device, as the air enters the drip tube through the side openings (25) and ascends into the container vessel (5) the liquid (51) descends inside the drip tube and out, drop by drop, through the mouth outlet (24).

The dispensation of liquid (51) can be accomplished by maintaining the device stuck in the ground or in a plant as schematically represented in Figure 3.

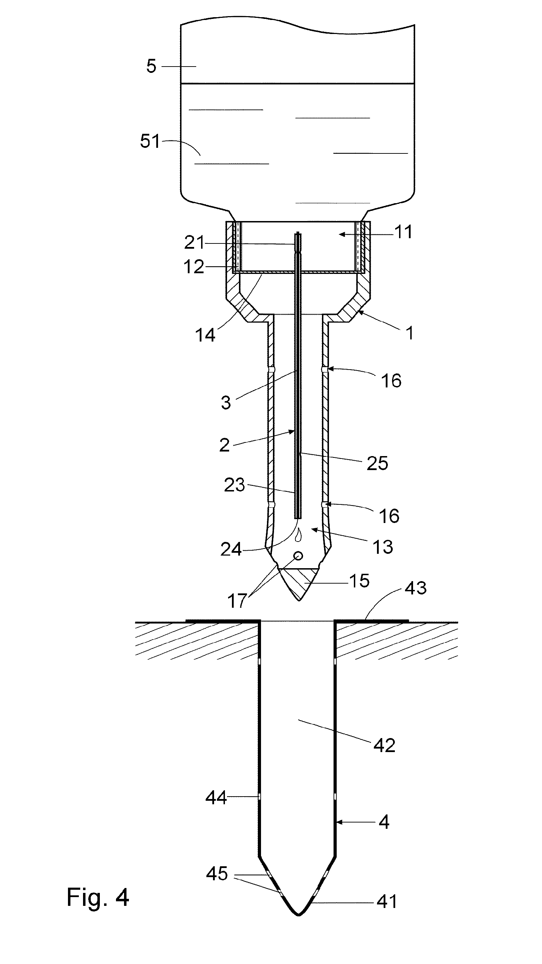

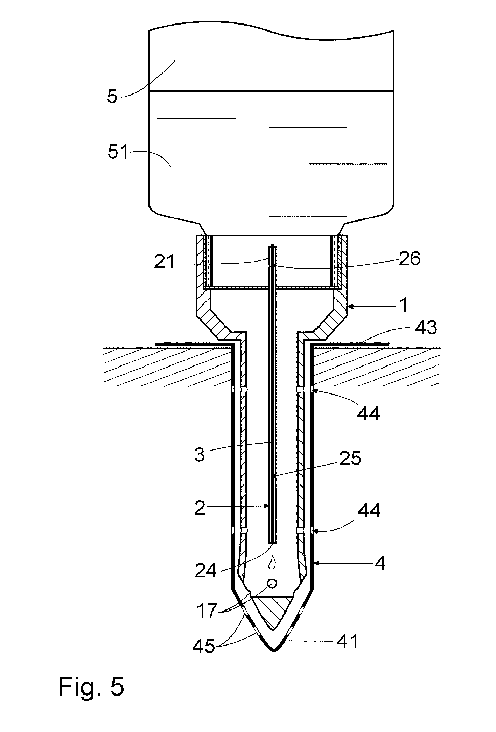

In the embodiment shown in Figures 4 and 5, the device further comprises a tubular protection (4) intended to be stuck into the ground or into a plant as shown schematically in Figure 5, allowing successive introductions and extractions of the housing (1) from the tubular protection (4), while said tubular protection (4) remains stuck in the same position.

This tubular protection (4) comprises a lower part (41) with a pointed end to facilitate plunging it into the ground; an upper end (42) with a mouth for insertion and removal of the housing (1) and some through openings (44, 45) for air inflow and the outflow of liquid dispensed by the device.

As can be seen in the aforementioned Figures 4 and 5, the protection (4) has at its upper end an outer stop (43) to limit its depth of entry.

Once the nature of the invention as well as an example of preferred embodiment have been sufficiently described, it is stated for all pertinent purposes that the materials, form, size and arrangement of the elements described are susceptible to changes, provided these do not involve an alteration of the essential characteristics of the invention that are claimed subsequently.

## Claims

1. A portable device for drip irrigation and treatment of plants; **characterized in that** it comprises:
- a housing (1) provided with an upper chamber (11) with a threaded mouth (12) for engaging a container (5) containing a liquid (51) to be dispensed, and with a lower chamber (13), separated from the upper chamber by a transverse wall (14); said lower chamber (13) being provided with a pointed end (15) for plunging it into the ground or into a plant and with openings (16, 17) appropriate for air inflow and for outflow of liquid to the exterior.
- a drip tube (2) that contains a wick (3) and that is placed passing through the transverse wall (14) forming a passage of liquid from the upper chamber (11) to the lower chamber (13); said drip tube (2) comprising: a first section (21) housed in the upper chamber (11) and provided with a liquid (51) mouth (22) inflow; and a second section (23) housed in the lower chamber (13), provided with a liquid (51) outflow mouth (24) and with at least one air inflow lateral opening (25) spaced from the liquid outflow mouth ( 24) by a determined distance depending on the dripping or dosing frequency to be carried out of the liquid (51) to be dispensed.

2. Device, according to claim 1, **characterized in that** the drip tube (2) comprises in the first section (21) at least one lateral opening (26) for the intake of the liquid (51) to be dispensed.

3. Device according to any one of the preceding claims; **characterized in that** it comprises a tubular protection (4) of suitable dimensions to allow successively introducing and removing the housing (1) of the device and holding it stably in a position of use; said tubular protection (4) comprising: a pointed lower end (41), suitable for plunging it into the ground or into a plant; an upper end (42) with a mouth suitable for inserting the housing (1) of the device and provided with at least one outer stop (43) suitable for limiting plunging thereof; and through openings (44, 45) for air inflow and for outflow of liquid (51) dispensed by the device.
